# EUROPEAN PATENT SPECIFICATION

(11) **EP 4 576 896 B1**
(45) Date of publication and mention of the grant of the patent: **04.03.2026**
(21) Application number: 23219601.4
(22) Date of filing: 22.12.2023
(51) Int. Cl.: H04W 68/02

(54) **METHOD FOR PROVIDING COMMUNICATION SERVICES TO A USER EQUIPMENT IN A CONFIGURABLE MANNER USING AN ACCESS NETWORK AND THE ACCESS NETWORK USING A NOTIFICATION CHANNEL, SYSTEM OR MOBILE COMMUNICATION NETWORK, USER EQUIPMENT, PROGRAM AND COMPUTER-READABLE MEDIUM**
KONFIGURIERBARES KOMMUNIKATIONSDIENSTVERFAHREN FÜR EIN TEILNEHMERGERÄT
RÉSEAU D'ACCÈS UTILISANT UN CANAL DE NOTIFICATION, SYSTÈME OU RÉSEAU DE COMMUNICATION MOBILE, ÉQUIPEMENT UTILISATEUR, PROGRAMME ET SUPPORT LISIBLE PAR ORDINATEUR

(43) Date of publication of application: 25.06.2025
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- "3rd Generation Partnership Project; Technical Specification Group Services and System Aspects; Procedures for the 5G System (5GS); Stage 2 (Release 17)", 19 September 2023 (2023-09-19), XP052517943, Retrieved from the Internet <URL:https://ftp.3gpp.org/3guInternal/3GPP_ultimate_versions_to_be_transposed/sentToDpc/23502-ha0.zip 23502-ha0.docx> [retrieved on 20230919]

## Description

### BACKGROUND

The present invention relates a method for providing communication services to a user equipment in a configurable manner using an access network and the access network using a notification channel, wherein the access network is an access network of or assigned to or associated with a mobile communication network, and wherein the mobile communication network comprises or is assigned to or associated with a core network, wherein the notification channel is used or able to be used in case that the user equipment has been detected of not having responded to
-- an incoming call for the user equipment and/or
-- an incoming paging indication for the user equipment and/or
-- a downlink data transmission indication,
wherein the notification channel is used to transmit, to the user equipment, one piece or a plurality of pieces of notification channel information.

Furthermore, the present invention relates to a system or a mobile communication network for providing communication services to a user equipment in a configurable manner using an access network and the access network using a notification channel, wherein the access network is an access network of or assigned to or associated with a mobile communication network, and wherein the mobile communication network comprises or is assigned to or associated with a core network, wherein the notification channel is used or able to be used in case that the user equipment has been detected of not having responded to
-- an incoming call for the user equipment and/or
-- an incoming paging indication for the user equipment and/or
-- a downlink data transmission indication,
wherein the notification channel is used to transmit, to the user equipment, one or a plurality of pieces of notification channel information.

Additionally, the present invention relates to a user equipment for being provided with communication services in a configurable manner using an access network and a mobile communication network, wherein the user equipment is part of a system or mobile communication network according to the present invention.

Furthermore, the present invention relates to a program and to a computer-readable medium for providing communication services to a user equipment in a configurable manner using an access network and a mobile communication network according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies.

Such mobile communication networks that are purely or predominantly based on terrestrial infrastructures of the radio access network (and, hence, are also called terrestrial networks or TN-networks) are typically organized throughout a country (or a part of or a region within a country) in a repeating pattern of typically stationary (radio) cells (and associated base station entities) which typically belong to (or are operated or used by or associated or assigned to) a mobile network operator (MNO).

As part of such known terrestrial cellular telecommunications networks - or geographical areas or regions where such terrestrial cellular telecommunications networks are operated -, there are typically some (geographical) parts or locations where (at least in average, i.e. using a plurality of user equipments) a better radio coverage is typically experienced by user equipments, whereas in other (geographical) parts or locations worse radio coverage is experienced.

In contrast to such purely or predominantly terrestrial mobile communication networks, it is also known to provide communication services using non-terrestrial networks, i.e. mobile communication networks that use, at least partly, non-terrestrial infrastructures of the radio access network (non-terrestrial networks or NTN-networks), especially using satellites and/or high-altitude platforms. Especially in case of using satellites - especially non-geostationary satellites that are preferred due to comparatively high latency characteristics of geostationary satellites -, one such satellite is typically able to provide (due to the movement of such a satellite relative to the earth surface, which relative movement typically occurs with rather large velocities, at least compared to typical (passenger) velocities used on the earth surface, e.g. by cars or by trains) radio coverage only in a specific combination of both a geographical area and a point in time (or during a time interval), such that radio coverage is provided to another geographical area, in the direction of movement of the satellite, at a later point in time (or during another time interval). Hence, a considered user equipment - being located at a specific location at a specific point in time - is typically able to be served, by different satellites and/or antenna entities or functionalities (or different base station entities) of a non-terrestrial network, wherein the radio coverage provided by such non-terrestrial network and/or the quality-of-service level experienced by the considered user equipment typically increases and decreases with the movement of the successive satellites of the non-terrestrial network. Hence, there is a dependence of the quality of the radio coverage (provided by the considered mobile communication network) on both the location of the considered user equipment and the considered time interval, and this dependence of the radio coverage stems from the dynamic nature of such mobile communication networks relying on non-terrestrial networks or non-terrestrial infrastructure.

In addition to modulations of the radio coverage being provided by a terrestrial or a non-terrestrial (access) network, the reception conditions of a considered user equipment might furthermore be modified (and/or deteriorated) - at a specific location of such a considered user equipment - not only by interference effects, e.g. caused by other user equipments and/or by other base station entities or other entities influencing the radio environment of the considered user equipment, but also by shadowing effects, e.g. caused by buildings and/or vegetation or the like, for example resulting in the considered user equipment not having clear view (NLOS, non-line-of-sight, conditions) to a satellite currently providing radio coverage. Furthermore, discontinuous radio coverage (or modifications thereof - and, thus degradations - of quality-of-service levels) is both possible in terrestrial networks (especially in case that the user equipment is moving relative to stationary base station entities) and, typically even more so, in non-terrestrial networks (even in case of stationary user equipments); this being especially true in case that the satellite constellation is still being built. Such modulations of the radio coverage and/or discontinuous radio coverage might prove especially detrimental in case of important or high-urgency communication services that need to be provided to a user equipment, e.g. emergency calls or the like.

In case of such situations of deteriorated radio coverage being able to be provided (by a considered (terrestrial or non-terrestrial) radio access network) to a considered user equipment - or in such situations of deteriorated reception conditions of such a user equipment -, it could be contemplated to use a notification channel (also called robust notification) which aims to provide such a considered user equipment with a simple notification (or piece of notification channel information) in specific situations or conditions, wherein the (robust) notification channel would use a better (more costly) coding and modulation than the conventionally known (and standardized) paging and/or data channels and, hence, would have a better coverage of, e.g., up to 18 dB over these normal channels. It is especially contemplated that such a (robust) notification channel is used in a situation that an incoming call was received (detected by the access network, and, e.g., a standard paging procedure conducted) but the considered user equipment has been unaware thereof, the considered user equipment did (finally) not respond to, e.g., a paging procedure as it has been out of coverage and thus not reachable for the downlink transmission). It might additionally be contemplated to use such a (robust) notification channel also in case that a downlink data transmission was scheduled for the considered user equipment, but the user equipment did not (finally) receive the related message or notification.

However, the indiscriminate or inflexible general usage of such a (robust) notification channel might be unwanted (or even be regarded as annoying) by the user of the respective user equipment, and, furthermore, such general usage might also lead to the need to expend considerable resources (especially radiofrequency, or spectrum resources) to such a notification channel.

### SUMMARY

An object of the present invention is to provide a technically simple, effective and cost-effective solution for using such a (robust) notification channel in a flexible manner, i.e. for providing communication services to a user equipment in a configurable manner using an access network and the access network using such a notification channel, wherein the notification channel is used or able to be used in case that the user equipment has been detected (by the access network) of not having responded to an incoming call for the user equipment and/or an incoming paging indication for the user equipment and/or a downlink data transmission indication. A further object of the present invention is to provide a corresponding system or a corresponding mobile communication network, a corresponding user equipment, and a corresponding program and computer-readable medium.

The object of the present invention is achieved by a method according to claim 1.

By means of using a notification channel priority indication, it is advantageously possible, according to the present invention, to use the notification channel - i.e. the transmission of the piece or pieces of notification channel information from the (serving) base station entity (or access network (node)) to the respective considered user equipment - in a flexible and configurable manner.

Thereby, it is especially advantageously possible, according to the present invention, to use the notification channel (and, hence, expend the corresponding radio or air interface resources) only when it is necessary and/or sought after by a user of the considered user equipment - and especially not in each and every occurrence when the considered user equipment is detected (by the serving base station entity of the access network) of not having responded to an incoming call and/or an incoming paging indication and/or a downlink data transmission indication.

In conventionally known prior mobile communication networks, such as, e.g., 2G (second generation systems) there were basically only two cellular (or mobile communication) services; basically, these were (especially circuit switched) voice calls and SMS (short message service). Nowadays, in conventionally known mobile communication networks, modern user equipments - such as smartphones and/or tablets and/or other personal digital assistants or devices, such as wearables, smart watches or the like - are continuously or almost continuously connected (to the access network, especially to a base station entity), and often dozens of applications (either downloaded applications, or apps, or applications being built-in (or connected or related) with the respective operating system of such devices, such as, e.g., iOS, iPadOS or Android) receive downlink, DL, data (i.e. data being sent, or transmitted, by the access network (or by an access network node, especially the respective serving base station entity) towards the respective (considered) user equipment) as, e.g., (whatever kind of) status updates, mails, OTT-messages (over-the-top-messages), news tickers, software updates, indications or the like.

In case that the considered user equipment is currently (i.e. at a specific considered point in time) in a situation of either comparatively bad radio coverage and/or bad reception conditions (e.g. due to interference, non-line-of-sight conditions towards a (serving) satellite), an indiscriminate and non-configurable use of such a (robust) notification channel would require it to be used rather often, leading, at least potentially, not only to a saturation of that notification channel (between the serving base station entity and the considered user equipment) and/or to such notifications being unwanted by a user of the user equipment, but potentially also to a waste of radio transmission resources (of the serving base station entity). E.g., assuming the case of a rural outdoor user who is interested only in certain information to be received in this situation, and especially if such user is outside of the access network coverage (e.g. outside of the radio coverage of a non-terrestrial network, NTN), this person might not be interested in receiving the latest news tickers, stock market or status changes, but only truly relevant information should come through; in this respect, such truly relevant information might, e.g., comprise incoming IMS voice calls, SMS, OTT calls (WhatsApp, Signal, Skype, etc), messages of defined OTT apps (WhatsApp, Signal, Skype, etc), potentially important other notification depending on the situation, especially public warning messages, e.g. of public warning systems, PWS.

In conventionally known mobile communication networks such a flexible use (or a use that is adapted to the respective needs of or associated with the considered user equipment) of the (robust) notification channel is not possible. Accordingly, in such presently known mobile communication networks, no further service differentiation for the notification indication (or robust notification channel) is considered - i.e. in a manner such that in a flexible and configurable manner, regarding a first kind of service (i.e. a higher priority communication service) the robust notification channel is used (i.e. the respective piece(s) of notification channel information transmitted), whereas regarding a second kind of service (i.e. a lower priority communication service) the robust notification channel is not used (i.e. the respective piece(s) of notification channel information not transmitted).

According to the present invention, the access network that serves a considered user equipment - i.e., typically, the serving base station entity of the considered user equipment - uses the (robust) notification channel in a configurable manner in order to transmit (to the user equipment, i.e. the user equipment receives, at least in case that the transmission channel (between the serving base station entity and the user equipment) is not degraded in a manner such that even a transmission using the (robust) notification channel is not possible any more) at least one piece notification channel information (i.e. either one piece of notification channel information or a plurality of pieces of notification channel information).

According to the present invention, the (robust) notification channel is used or is able to be used in case that the user equipment has been detected of not having responded to
-- an incoming call for the user equipment and/or
-- an incoming paging indication for the user equipment and/or
-- a downlink data transmission indication.

This refers to situations where the serving base station entity tries to notify, to the considered user equipment, that such an event or situation (an incoming call, an incoming paging indication and/or a downlink data transmission indication) applies (or has occurred), and (due to this notification having been sent to the considered user equipment) the serving base station entity expects the considered user equipment to, at least somehow, respond or react, e.g. by means of - at least - acknowledging to have received such notification. In case such a reaction or response (being expected by the serving base station entity) does not occur from the considered user equipment (or, is, at least, not received by the serving base station entity), then the serving base station entity concludes that the considered user equipment is not reachable - at least not by means of transmitting (if applicable repeatedly) such a notification message or notification messages according to established procedures and using the standardized communication protocols and signal transmission procedures.

According to the present invention, such a situation corresponds to the considered user equipment being (or having been) detected of not having responded to an incoming call and/or an incoming paging indication and/or a downlink data transmission indication, and, as a consequence of such detection or determination (by the access network or the respective serving base station entity), the (robust) notification channel is used (or, rather, able to be used) to transmit, to the user equipment, one piece or a plurality of pieces of notification channel information.

According to the present invention, the notification channel is used in a configurable manner based on a notification channel priority indication that is available, in such an above-mentioned situation (where the (robust) notification channel is used), either at the core network or at the access network (e.g. the serving base station entity) or at both access network and the core network. The notification channel priority indication is available by means of the core network and/or the access network:
-- either (already) having (or comprising) the notification channel priority indication, i.e. being correspondingly configured beforehand (e.g. according to a standard or default configuration that might be based on an assumed consent of the user of the considered user equipment but that might be overwritten by such user),
-- or by means of receiving the notification channel priority indication (especially dedicatedly from the considered user equipment).

Hence, according to the present invention, and based on the assumption that the notification channel priority indication is available to the core network and/or at the access network (depending on which one thereof is invoking or triggering the use of the notification channel), the method according to the present invention comprises the steps of - based on the notification channel priority indication and in case that a specific piece of notification channel information is able to be transmitted or is potentially transmitted, by the core network and/or by the access network, to the user equipment - detecting whether the specific piece of notification channel information is related to a higher priority communication service or to a lower priority communication service, and, depending thereof, either transmitting or not transmitting the specific piece of notification channel information. This means that, in the second step,
-- the specific piece of notification channel information is transmitted (to the user equipment) in case that the specific piece of notification channel information is related to the higher priority communication service, and
-- the specific piece of notification channel information is suppressed from being transmitted (i.e. not transmitted) in case that the specific piece of notification channel information is related to the lower priority communication service.

Hence, according to the present invention, the specific piece of notification channel information might correspond to a simple 1-bit-indication to a particular user equipment (i.e. the considered user equipment) that, e.g., a downlink paging has been missed; as reaction on this reception, the (considered) user equipment might vibrate/beep/display a notification that the customer is (or, at least, has been) out of reach (or radio coverage). In addition to this signaling (or, at least, 1-bit-indication), there might also be an indication (to the user of the user equipment (i.e. typically by means of an optical indication using a display device or display unit of the user equipment); e.g. by means of using a map information that has especially been transmitted previously, i.e. during a time interval of superior radio coverage of the considered user equipment) as to where (i.e. to which location or in which direction) a user of the considered user equipment should go to be provided with a better radio coverage. Hence, according to the present invention, the specific piece of notification channel information - e.g. corresponding to a 1-bit-indication - might only indicate, to the considered user equipment or its user, the information content "you have missed a message/call/paging", or, alternatively, it might indicate (besides this information content and if combined with other information such as a map information) where a better coverage might be found; these two possibilities might even be differentiated by means of transmitting the specific piece of notification channel information (as a 1-bit-indication) either as a binary "0" or as a binary "1", such that, in one of these possibilities, solely the information content ("you have missed a message/call/paging") is indicated, whereas, in the other of these two possibilities, this information content together with the indication to also display (or signal otherwise) the mentioned location information regarding a better coverage is indicated. Hence, according to the present invention, it is advantageously possible that a user (of the considered user equipment) is able to (pre-)configure the desired notifications (i.e. to configure, in a flexible manner, how the robust notification channel shall be used) for different applications prior to getting into situations (of comparatively low radio coverage and/or reception conditions) where such notification channel or extended notification would be relevant; furthermore according to the present invention, the necessary information elements on the relevant interfaces (for this configuration of the notification channel) are preferably and advantageously defined to cover this possibility as part of the 3GPP 4G, 5G and/or 6G standards. In the context of the present specification, the relevant details are exemplarily described below for 5G systems and are similarly applicable also to 4G systems and are expected to be similarly applicable, mutatis mutandis, to 6G systems.

According to the present invention, it is advantageously possible and preferred that the specific piece of notification channel information relates to at least one out of the following:
-- one radio access bearer or a plurality of radio access bearers that the user equipment is currently using or is able to use or is allowed to use,
-- one quality-of-service level or a plurality of quality-of-service levels that the user equipment is currently using or is able to use or is allowed to use,
-- one application running on the user equipment or a plurality of applications running on the user equipment.

It is thereby advantageously possible to easily and efficiently implement the present invention, wherein the granularity of the notification channel being configurable (i.e. a notification channel information is either transmitted to the user equipment or not) is on a radio access bearer level (i.e. linked to which radio access bearer is used for a specific communication service or application), and is able to be configured (or to be switched on or off) on that level; in this respect, a higher or lower priority communication service would need to be understood as a higher or lower priority radio access bearer (identity).

Alternatively or cumulatively, the granularity of the notification channel being configurable is on a quality-of-service level (i.e. linked to which quality-of-service is used for a specific communication service or application), and is able to be configured (or to be switched on or off) on that level; in this respect, a higher or lower priority communication service would need to be understood as a higher or lower priority quality-of-service level (identity).

Alternatively or cumulatively, the granularity of the notification channel being configurable is on an application level (i.e. linked to which application is used for a specific communication service or application), and is able to be configured (or to be switched on or off) on that level; in this respect, a higher or lower priority communication service would need to be understood as a higher or lower priority application (identity).

According to the present invention, it is advantageously furthermore possible and preferred that the access network comprises at least one base station entity, wherein the at least one base station entity is serving the user equipment, and wherein the notification channel is used to transmit - by the serving base station entity to the user equipment - the one piece or the plurality of pieces of notification channel information.

It is thereby advantageously possible according to the present invention to realize and implement the inventive method in a comparatively simple and efficient manner.

According to all different embodiments and variants of the present invention, it is advantageously furthermore possible and preferred that the transmission of the piece or pieces of notification channel information via or using the notification channel, is based on using a special transmission mode or configuration, wherein the special transmission mode or configuration allows for an improved signal-to-noise ratio resulting in an increased link budget, wherein the improved link budget is at least 10 dB, preferably at least 15 dB, more preferably at least 18 dB improved compared to normal, or standard, downlink radio transmission from the serving base station entity towards the user equipment.

It is thereby advantageously possible according to the present invention to realize and implement a robust notification channel to be able to reliably transmit notification channel information to the (considered) user equipment even though the radio coverage of the considered user equipment and/or the reception conditions are rather bad.

According to all different embodiments and variants of the present invention, it is advantageously furthermore possible and preferred that:
-- the notification channel is used or able to be used (by the base station entity or by the access network) exclusively in case that the user equipment has been detected (by the base station entity or by the access network) of not having responded to
   -- an incoming call for the user equipment and/or
   -- an incoming paging indication for the user equipment and/or
   -- a downlink data transmission indication,
   or that:
   -- the notification channel is used or able to be used (by the base station entity or by the access network) exclusively in case that the user equipment has been detected (by the base station entity or by the access network), of finally not having responded to
   -- an incoming call for the user equipment and/or
   -- an incoming paging indication for the user equipment and/or
   -- a downlink data transmission indication.

It is thereby advantageously possible according to the present invention to realize and implement the inventive method in a comparatively simple and efficient manner; especially, the notification channel is a notification channel that is exclusively used in case that the user equipment has missed an incoming call and/or an incoming paging indication and/or a downlink data transmission indication. Furthermore, especially the notification channel is preferably only invoked or activated in case that the considered user equipment is detected to finally not having responded to such incoming calls/paging indications or downlink data transmission indications, i.e. it might be possible that, e.g., an incoming call is indicated once to the considered user equipment, and, in case of no response from the user equipment, that incoming call indication is repeated (at least once), and the notification channel is invoked only in case that finally - i.e. after the last possible (i.e. according to a configuration of, e.g., the serving base station entity by, e.g., the mobile network operator) indication or repetition thereof - the serving base station entity does not detect any response or answer from the considered user equipment.

According to the present invention, it is furthermore advantageously possible and preferred that, in a third step prior to the first step, the user equipment transmits a notification channel configuration message to the access network and/or to the core network, wherein the notification channel configuration message comprises, or indicates, the notification channel priority indication, wherein especially the notification channel configuration message and/or the notification channel priority indication indicates whether a piece of notification channel information is to be transmitted and/or whether a piece of notification channel information is to be suppressed in case it relates to one or to a plurality out of the following:
-- IP multimedia subsystem voice calls,
-- short message service messages,
-- over the top voice calls, especially differentiated per different application, especially whatsapp, signal, threema, skype,
-- over the top message services, especially differentiated per different application, especially whatsapp, signal, threema, skype,
-- over the top status updates of contacts, especially differentiated per different application, especially whatsapp, signal, threema, skype,
-- news ticker,
-- software updates.

It is thereby advantageously possible according to the present invention to realize and implement the inventive method in a comparatively simple and efficient manner.

Furthermore, it is advantageously possible and preferred according to the present invention that the notification channel priority indication refers to at least one out of the following:
-- first and/or second priority communication services, wherein the first priority communication services correspond to higher priority communication services and the second priority communication services correspond to lower priority communication services,
-- first, second and/or third priority communication services, wherein either the first and second priority communication services correspond to higher priority communication services and the third priority communication services correspond to lower priority communication services, or wherein the first priority communication services correspond to higher priority communication services and the second and third priority communication services correspond to lower priority communication services,
-- first, second, third and/or fourth priority communication services, wherein either
   -- the first, second and third priority communication services correspond to higher priority communication services and the fourth priority communication services correspond to lower priority communication services, or
   -- the first and second priority communication services correspond to higher priority communication services and the third and fourth priority communication services correspond to lower priority communication services, or
   -- the first priority communication services correspond to higher priority communication services and the second, third and fourth priority communication services correspond to lower priority communication services.

It is thereby advantageously possible according to the present invention to realize and implement the inventive method in a comparatively simple and efficient manner:
In case of only first and/or second priority communication services, it is advantageously possible to provide an extremely elevated level of flexibility regarding the possibility to configure the notification channel functionality; for example, it might be possible - for the user of the considered user equipment - to define specific individual applications and/or specific communication services being related to a specific quality-of-service level as (corresponding to) first priority communication services (i.e. higher priority communication services where the piece(s) of notification channel information is/are transmitted), whereas (all the) other applications and/or communication services would be second priority communication services (i.e. lower priority communication services where the piece(s) of notification channel information is/are not transmitted).

Furthermore, in case of first, second and/or third priority communication services or first, second, third and/or fourth priority communication services, it is advantageously possible to likewise provide an elevated level of flexibility regarding the possibility to configure the notification channel functionality; for example, by means of having, if applicable, a plurality of predefined groups (or priority levels) of communication services, it might be possible - for the user of the considered user equipment - to choose the priority level of communication services where the notification channel functionality is activated or not (i.e. by means of defining, for example, only the first priority communication services as higher priority communication services (and all the others as lower priority communication services), or, alternatively, say, define the first and second priority communication services as higher priority communication services (and likewise all the others as lower priority communication services)). Thereby, by means of using a plurality of predefined groups (or priority levels) of communication services, it might advantageously be possible to realize an enhance level of data privacy (regarding which applications are related to (or used by) the considered user equipment at all and/or regarding the preferences of the user of the considered user equipment in view of the notification channel functionality).

According to the present invention, it is furthermore advantageously possible and preferred that the notification channel priority indication is transmitted, to the radio access network, by means of one out of the following:
-- a packet data unit session resource setup request message, PDU session resource setup request message, especially sent by an access and mobility management function of the core network to the respective network node of the access network, especially the serving base station entity, and especially in case that the user equipment is in radio resource control-connected mode, RRC-connected mode, or in radio resource control-inactive mode, RRC-inactive mode,
-- a dynamic 5QI descriptor message, especially sent by the access and mobility management function of the core network to the respective network node of the access network, especially the serving base station entity, and especially in case that the user equipment is in radio resource control-connected mode, RRC-connected mode, or in radio resource control-inactive mode, RRC-inactive mode,
-- a paging message, especially in case that the user equipment is in radio resource control-idle mode, RRC-idle mode.

It is thereby advantageously possible according to the present invention to realize and implement the inventive method in a comparatively simple and efficient manner.

Furthermore, it is advantageously possible and preferred according to the present invention that the access network corresponds to a terrestrial access network or to a non-terrestrial access network.

It is thereby advantageously possible according to the present invention to realize and implement the inventive method in a comparatively simple and efficient manner.

Furthermore, the present invention relates to a system or to a mobile communication network according to claim 8.

Furthermore, the present invention relates to a user equipment according to claim 9.

Additionally, the present invention relates to a program according to claim 10.

Still additionally, the present invention relates to a computer-readable medium according to claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

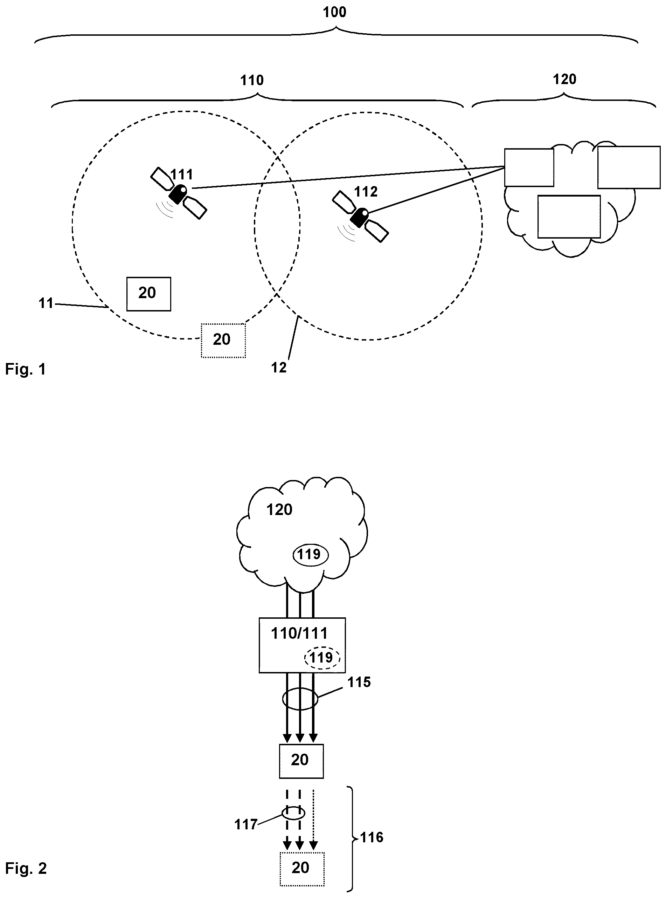

Figure 1 schematically and exemplarily illustrates the situation of a user equipment in a mobile communication network and using an access network (of or associated with the mobile communication network) that uses a (robust) notification channel, wherein communication services are able to be provided, to the user equipment and using the notification channel, in a configurable manner.
Figure 2 schematically and exemplarily illustrates, in greater detail, the situation of the considered user equipment being served by an access network (or a base station entity thereof), the access network being part of, or associated with, a mobile communication network and the mobile communication network comprising (or being assigned to or associated with) a core network, wherein the notification channel is used or able to be used in a configurable manner in case that the user equipment has been detected of not having responded to an incoming call for the user equipment and/or an incoming paging indication for the user equipment and/or a downlink data transmission indication.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, the situation of a user equipment 20 in a mobile communication network 100 and using an access network 110 (of or associated with the mobile communication network 100) is schematically and exemplarily illustrated. The mobile communication network 100 - via the access network 110 - is able to use a (robust) notification channel which is able to be used even in a situation of the user equipment 20 currently being in a comparatively bad radio coverage situation. According to the present invention and in contrast to what is possible in conventionally known mobile communication networks, by means of using the (robust) notification channel, it is possible to provide communication services, to the user equipment, in a configurable - and, hence, flexible - manner.

Figure 1 shows two instances of the user equipment 20 being located in (or as part of) the mobile communication network 100 and using the access network 110 of or associated with the mobile communication network 100. Communication services might be able to be provided, to the user equipment 20, on a normal (or increased) quality-of-service level (i.e. in case that radio coverage is rather good - schematically represented, in Figure 1, by means of the user equipment 20 (or an instance thereof) being located completely within a radio coverage area 11 of a base station entity 111 and being represented by a box with a drawn-through line). Furthermore, communication services might also be able to be provided, to the user equipment 20, in case of worse radio transmission conditions - schematically represented, in Figure 1, by means of the user equipment 20 (or another instance thereof) being located on the border, or partly outside of the radio coverage area 11 of the base station entity 111 and being represented by a box with a dotted line).

In the context of the present invention, the user equipment 20 represented in Figure 1 might also be called a considered user equipment 20 or a specific user equipment 20; of course, further user equipments are typically present and connected to (and/or served by) the mobile communication network 100, however, again for the sake of simplicity, such further user equipments are not represented in Figure 1.

Figure 1 illustrates the situation of the user equipment 20 in a mobile communication network 100, typically being a non-terrestrial network, and comprising the access network 110 and a core network 120. The mobile communication network 100 is preferably a cellular telecommunications network comprising typically a plurality of network cells (or radio cells). The access network 110 is part of or associated with the mobile communication network 100. The user equipment 20 is able to be connected to (or served by) the (first) base station entity 111 and/or a further (or second) base station entity 112, both base station entities 111, 112 being part of the access network 110. Typically, the access network 110 comprises, besides the (first and second) base station entities 111, 112, still further base station entities which are, however and the sake of simplicity, not shown in Figure 1. In the exemplarily shown non-terrestrial network as an example of a mobile communication network 100 according to the present invention, each of the base station entities 111, 112 of the mobile communication network 100 (or of the access network 110 thereof) serves a radio coverage area or radio cell, the (first) base station entity 111 serving a first radio cell 11, and the second base station entity 112 serving a second radio cell 12. In a non-terrestrial network, such radio coverage areas or radio cells 11, 12 provided or generated by the base station entities 111, 112 of the access network 110 are typically geographically moving (i.e. continuously covering specific geographical areas at specific points in time but moving relative to the earth's surface, typically along the path of movement of the respective base station entity).

The term base station entity 111, 112 serving the user equipment 20 is used here in association, especially and exemplarily, with satellites or high-altitude platforms being part of the non-terrestrial infrastructure of the mobile communication network 100 or of its (or assigned or associated) access network 110; however, it is to be understood, that such satellites do not necessarily need to comprise (or to be provided such that) all functional elements or functionalities of a base station entity, such as a gNB in, e.g., a 5G mobile communication network 100: In, or as part of, a non-terrestrial network, there are typically (and necessarily) further infrastructure elements such as ground stations providing feeder links, etc., and the distribution of functionalities (or parts) of a base station entity might be distributed also among these further infrastructure elements; nevertheless, a considered user equipment 20 is served by the base station entity functionality and at least the antenna part - or radio unit - needs to be located, in a non-terrestrial network, aboard a satellite or satellite device or aboard a high-altitude platform; hence at least from the perspective of that considered user equipment 20, the base station entity functionality is aboard that satellite or high-altitude platform.

According to the present invention, communication services are provided to the user equipment 20 using the access network 110 of or associated with the mobile communication network 100. Such a situation is schematically and exemplarily illustrated in Figure 2, i.e. the user equipment is served by an access network 110, i.e. typically by a base station entity 111 of the access network 110, and the access network 110 is part of, or associated with, the mobile communication network 100, the mobile communication network 100 comprising (or being assigned to or associated with) the core network 120. Also Figure 2 shows two instances of the user equipment 20:
-- an upper (or first) one (in Figure 2, box with a drawn-through line) representing a normal (or increased) quality-of-service level (thus, representing the situation that radio coverage is rather good), and
-- a lower (or second) one (box with a dotted line) representing worse radio transmission conditions.

If the considered user equipment 20 is in a situation of the upper or first instance, a plurality of dedicated data radio access bearers, RAB, 115 are used to provide communication services to the considered user equipment 20. If the considered user equipment 20 is in a situation of the lower or second instance, the notification channel 116 is used or able to be used, i.e. one or a plurality of pieces of notification channel information 117 are potentially transmitted, by the serving base station entity 111 to the considered user equipment 20. In the example shown in Figure 2, the notification channel 116 is only activated regarding two (out of the three) radio access bearers 115, i.e. only regarding such two radio access bearers 115, notification channel information (or a piece or pieces thereof) is/are transmitted.

According to the present invention, this filtering is able to be realized by means of (or based on) the notification channel priority indication 119. The notification channel priority indication 119 is able to be accessed by the core network 120 and/or by the access network 110 (especially by the serving base station entity 111); especially the notification channel priority indication 119 is provided to the core network 120 and/or to the access network 110, either by means of (initial) configuration and/or by means of the considered user equipment 20 transmitting the notification channel priority indication 119.

Hence, Figure 2 shows the principle according to the present invention, indicating three services (for simplicity each on a dedicated data radio access bearer RAB 115): The assumption is that the core network 120 can either decide on a per (established) service level or at least on per data radio bearer for which the 4G/5G quality-of-service (QoS) concept with its QCI/5QI could be utilized.

The (radio) access network 110 might either be satellite based (SAN, satellite access network or be a non-terrestrial network, also potentially having high-altitude platforms) or a terrestrial access network 110, and the considered user equipment 20, initially in a normal coverage situation (first instance, upper representation in Figure 2) with all three services 115 and there related downlink data transfers enabled. In the lower part of the drawing (dotted lines) considered the user equipment 20 is outside the radio coverage and only reachable by the dedicated notification channel which is, in the exemplarily shown situation, only enabled for service / RAB #1 and #2 based on the pre-configured filtering, i.e. based on the notification channel priority indication 119. This filtering is applied
-- either in the core network 120 directly (e.g. in situations where the considered user equipment 20 is in IDLE mode (radio resource control idle mode), cf. the representation of reference sign 119 as part of the core network 120,
-- or in the (radio) access network 110, e.g. a satellite access network, SAN, (e.g. in sitatuations where the considered user equipment 20 is in INACTIVE mode (radio resource control inactive mode) or in CONNECTED mode (radio resource control connected mode).

Especially according to the present invention, the signaling between the core network 120 and the access network 110 is modified compared to currently known mobile communication networks:
In a preliminary (optional) processing step, it is preferred that an application-level connection is established between the considered user equipment 20 to the customer portal of the mobile network operator to (potentially individually) preconfigure the functionality of the notification channel 116 (i.e. when to send notifications (notification channel information 117, or pieces thereof) for missed paging of incoming services (mobile terminated). Especially, the mobile network operator customer portal offers the customer (of the considered user equipment 20) individual notification options per applicable service such as (i.e. regarding to at least one out of the following):
-- IMS Voice calls,
-- SMS,
-- OTT Voice calls (potentially differentiated per App),
-- WhatsApp Voice,
-- Signal Voice,
-- Threema Voice,
-- Skype Voice,
-- OTT message services (potentially differentiated per App),
-- WhatsApp messages,
-- Signal messages,
-- Threema messages,
-- Skype messages,
-- OTT status updates - of contact (potentially differentiated per App),
-- WhatsApp status updates,
-- Signal status updates,
-- Threema status updates,
-- Skype status updates,
-- News Ticker,
-- Software Updates,
-- other.

This corresponds to the considered user equipment 20 transmitting a notification channel configuration message to the access network 110 and/or to the core network 120 (but, rather, to the core network 120), wherein (at least implicitly) the notification channel configuration message (via the choices transmitted to the mobile network operator portal) comprises, or indicates, the notification channel priority indication 119.

Once the considered user equipment 20 is connected (i.e. served by the access network and/or one of its base station entities, e.g. base station entity 111), this pre-configured information (i.e. the notification channel priority indication 119) is taken into account while the individual connections are established between the core network 120 and the access network 110.

According to the present invention, it is proposed to enhance, e.g., the PDU SESSION RESOURCE SETUP REQUEST message from the access and mobility management function, AMF, to the NG-RAN (next generation radio access network) or the dynamic 5QI descriptor (or alternatives) or the PAGING message with relevant new information elements in order to transmit the notification channel priority indication 119 (or notification indication); in the context of the present invention, this is also hereinafter called "PDU Session Notification Indication" or "Notification Indication" - marked, in the following tables by means of the designation ***NEW***.

Exemplarily, for the case of the considered user equipment 20 being in CONNECTED mode or INACTIVE mode, the PDU SESSION RESOURCE SETUP REQUEST message is updated in order to be able to transmit the notification channel priority indication 119:
This message is sent by the AMF and is used to request the NG-RAN node to assign resources on Uu and NG-U for one or several PDU session resources.
Direction: AMF → NG-RAN node

| IE/Group Name | Presence | Range | IE type and reference | Semantics description | Criticality | Assigned Criticality |
|---|---|---|---|---|---|---|
| Message Type | M | | 9.3.1.1 | | YES | reject |
| AMF UE NGAP ID | M | | 9.3.3.1 | | YES | reject |
| RAN UE NGAP ID | M | | 9.3.3.2 | | YES | reject |
| RAN Paging Priority | O | | 9.3.3.15 | | YES | ignore |
| NAS-PDU | O | | 9.3.3.4 | | YES | reject |
| PDU Session Resource Setup Request List | | 1 | | | YES | reject |
| >PDU Session Resource Setup Request Item | | 1..<max noofPD USessio ns> | | | - | |
| >>PDU Session ID | M | | 9.3.1.50 | | - | |
| >>PDU Session NAS-PDU | O | | NAS-PDU | | - | |
| | | | 9.3.3.4 | | | |
| >>S-NSSAI | M | | 9.3.1.24 | | - | |
| >>PDU Session Resource Setup Request Transfer | M | | OCTET STRING | Containing the PDU Session Resource Setup Request Transfer IE specified in subclause 9.3.4.1. | - | |
| >>PDU Session Expected UE Activity Behaviour | O | | Expected UE Activity Behaviour | Expected UE Activity Behaviour for the PDU Session. | YES | ignore |
| | | | 9.3.1.94 | | | |
| ***NEW*** >>PDU Session Notification Indication | M | | ENUMERAT ED (Activated, Not Activated, ...) | | YES | ignore |
| UE Aggregate Maximum Bit Rate | O | | 9.3.1.58 | | YES | ignore |
| UE Slice Maximum Bit Rate List | O | | 9.3.1.231 | | YES | ignore |

Alternatively, the notification channel priority indication 119 is transmitted by means of the Notification Indication (information element) added to the 5QI concept:

### 9.3.1.18 Dynamic 5QI Descriptor

This IE indicates the QoS Characteristics for a Non-standardized or not pre-configured 5QI for downlink and uplink.

| IE/Group Name | Presence | Range | IE type and reference | Semantics description | Criticality | Assigned Criticality |
|---|---|---|---|---|---|---|
| Priority Level | M | | 9.3.1.84 | Priority Level is specified in TS 23.501 [9]. | - | |
| Packet Delay Budget | M | | 9.3.1.80 | Packet Delay Budget is specified in TS 23.501 [9]. This IE is ignored if the Extended Packet Delay Budget IE is present. | - | |
| Packet Error Rate | M | | 9.3.1.81 | Packet Error Rate is specified in TS 23.501 [9]. | - | |
| 5QI | O | | INTEGER (0..255, ...) | Indicates the dynamically assigned 5QI as specified in TS 23.501 [9]. | - | |
| Delay Critical | C-ifGBRfl ow | | ENUMERAT ED (delay critical, non-delay critical, ...) | Indicates whether the GBR QoS flow is delay critical as specified in TS 23.501 [9]. | - | |
| ***NEW*** Notification Indication | M | | ENUMERAT ED (Activated, Not Activated, ...) | Indicates whether the QoS flow is subject to Notification as specified in XYZ. | - | |
| Averaging Window | C-ifGBRflow | | 9.3.1.82 | Averaging Window is specified in TS 23.501 [9]. | - | |
| Maximum Data Burst Volume | ○ | | 9.3.1.83 | Maximum Data Burst Volume is specified in TS 23.501 [9]. This IE shall be included if the Delay Critical IE is set to "delay critical" and is ignored otherwise. | - | |
| Extended Packet Delay Budget | O | | 9.3.1.135 | Packet Delay Budget is specified in TS 23.501 [9]. | YES | ignore |
| CN Packet Delay Budget Downlink | O | | Extended Packet Delay Budget | Core Network Packet Delay Budget is specified in TS 23.501 [9]. | YES | ignore |
| | | | 9.3.1.135 | | | |
| | | | | This IE may be present in case of GBR QoS flows and is ignored otherwise. | | |
| CN Packet Delay Budget Uplink | ○ | | Extended Packet Delay Budget | Core Network Packet Delay Budget is specified in TS 23.501 [9]. | YES | ignore |
| | | | 9.3.1.135 | | | |
| | | | | This IE may be present in case of GBR QoS flows and is ignored otherwise. | | |

According to the present invention, it is especially preferred that the core network 120 - especially the access and mobility management function thereof (AMF) - informs the access network 110 on a per radio bearer, 5QI or PDU flow level about the (pre-)configred Notification Indication, so that the access network 110 is able to perform the notification channel functionality, for the considered user equipment 20, according to and based on the pre-configured information (notification channel priority indication 119) to only activate the notification channel 16 for the desired services.

For IDLE Mode related procedures, the access and mobility management function, AMF, shall apply the Notification Filter (i.e. the notification channel priority indication 119) before applying the paging procedure and, especially, enhance the PAGING Message as follows by means of the Notification Indication:

### 9.2.4 Paging Messages

### 9.2.4.1 PAGING

This message is sent by the AMF and is used to page a UE in one or several tracking areas.

Direction: AMF → NG-RAN node

| IE/Group Name | Presence | Range | IE type and reference | Semantics description | Criticality | Assigned Criticality |
|---|---|---|---|---|---|---|
| Message Type | M | | 9.3.1.1 | | YES | ignore |
| UE Paging Identity | M | | 9.3.3.18 | | YES | ignore |
| Paging DRX | O | | 9.3.1.90 | | YES | ignore |
| TAI List for Paging | | 1 | | | YES | ignore |
| >TAI List for Paging Item | | 1..<max noofTAlf orPagin g> | | | - | |
| >>TAI | M | | 9.3.3.11 | | - | |
| Paging Priority | O | | 9.3.1.78 | | YES | ignore |
| ***NEW*** Notification Indication | M | | ENUMERAT ED (Activated, Not Activated, ...) | | YES | ignore |
| UE Radio Capability for Paging | O | | 9.3.1.68 | | YES | ignore |
| Paging Origin | O | | 9.3.3.22 | | YES | ignore |
| Assistance Data for Paging | O | | 9.3.1.69 | | YES | ignore |
| NB-IoT Paging eDRX Information | O | | 9.3.1.138 | | YES | ignore |
| NB-IoT Paging DRX | O | | 9.3.1.139 | If this IE is present, the Paging DRX IE is ignored. | YES | ignore |
| Enhanced Coverage Restriction | O | | 9.3.1.140 | | YES | ignore |
| WUS Assistance Information | O | | 9.3.1.143 | | YES | ignore |
| E-UTRA Paging eDRX Information | O | | 9.3.1.154 | | YES | ignore |
| CE-mode-B Restricted | O | | 9.3.1.155 | | YES | ignore |
| NR Paging eDRX Information | O | | 9.3.1.227 | | YES | ignore |
| Paging Cause | O | | ENUMERAT ED (voice, ...) | | YES | ignore |
| PEIPS Assistance Information | O | | 9.3.1.232 | | YES | ignore |

In a further variant or embodiment of the present invention, It is especially preferred that the Notification Indication (i.e. notification channel priority indication 119) does not only indicate to activate or to not activate the notification channel 116, but also indicates the number of retries (e.g. from one (indicating no retry) to a maximum number, e.g. 10; "1 ..[10]") of the notification (i.e. the number of times the (piece or pieces of) notification channel information is/are transmitted by the access network 110 and/or a repeat timer (repeat every X s for T s) is able to be added to the signaling (i.e. to the notification channel priority indication 119).

## Claims

1. Method for providing communication services to a user equipment (20) in a configurable manner using an access network (110) and the access network (110) using a notification channel (116), wherein the access network (110) is an access network (110) of or assigned to or associated with a mobile communication network (100), and wherein the mobile communication network (100) comprises or is assigned to or associated with a core network (120),
wherein the notification channel (116) is used or able to be used in case that, due to having been out of coverage or having been provided with bad coverage, the user equipment (20) has been detected of not having responded to
-- an incoming call for the user equipment (20) and/or
-- an incoming paging indication for the user equipment (20) and/or
-- a downlink data transmission indication,
wherein the notification channel (116) is used to transmit, to the user equipment (20), one piece or a plurality of pieces of notification channel information (117), wherein, in order to use the notification channel (116) in a configurable manner, the core network (120) and/or the access network (110) receives and/or comprises a notification channel priority indication (119) and the method comprises the following steps:
-- in a first step, based on the notification channel priority indication (119) and in case that a specific piece of notification channel information (117) is able to be transmitted, by the core network (120) and/or by the access network (110), to the user equipment (20), it is detected whether the specific piece of notification channel information (117) is related to a higher priority communication service or to a lower priority communication service,
-- in a second step, the specific piece of notification channel information (117) is transmitted, to the user equipment (20), in case that the specific piece of notification channel information (117) is related to the higher priority communication service and the specific piece of notification channel information (117) is suppressed from being transmitted in case that the specific piece of notification channel information (117) is related to the lower priority communication service,
wherein the access network (110) comprises at least one base station entity (111), wherein the at least one base station entity (111) is serving the user equipment (20), and wherein the notification channel (116) is used to transmit - by the serving base station entity (111) to the user equipment (20) - the one piece or the plurality of pieces of notification channel information (117),
wherein the transmission of the piece or pieces of notification channel information (117), via or using the notification channel (116), is based on using a special transmission mode or configuration, wherein the special transmission mode or configuration allows for an improved signal-to-noise ratio resulting in an increased link budget, wherein the improved link budget is at least 10 dB, preferably at least 15 dB, more preferably at least 18 dB improved compared to normal, or standard, downlink radio transmission from the serving base station entity (111) towards the user equipment (20).

2. Method according to claim 1, wherein the specific piece of notification channel information (117) relates to at least one out of the following:
-- one radio access bearer (115) or a plurality of radio access bearers (115) that the user equipment (20) is currently using or is able to use or is allowed to use,
-- one quality-of-service level or a plurality of quality-of-service levels that the user equipment (20) is currently using or is able to use or is allowed to use,
-- one application running on the user equipment (20) or a plurality of applications running on the user equipment (20).

3. Method according to one of the preceding claims, wherein the notification channel (116) is used or able to be used, by the base station entity (111) or by the access network (110), exclusively in case that the user equipment (20) has been detected, by the base station entity (111) or by the access network (110), of not having responded to
-- an incoming call for the user equipment (20) and/or
-- an incoming paging indication for the user equipment (20) and/or
-- a downlink data transmission indication,
wherein especially the notification channel (116) is used or able to be used, by the base station entity (111) or by the access network (110), exclusively in case that the user equipment (20) has been detected, by the base station entity (111) or by the access network (110), of finally not having responded to
-- an incoming call for the user equipment (20) and/or
-- an incoming paging indication for the user equipment (20) and/or
-- a downlink data transmission indication.

4. Method according to one of the preceding claims, wherein, in a third step prior to the first step, the user equipment (20) transmits a notification channel configuration message to the access network (110) and/or to the core network (120), wherein the notification channel configuration message comprises, or indicates, the notification channel priority indication (119),
wherein especially the notification channel configuration message and/or the notification channel priority indication (119) indicates whether a piece of notification channel information (117) is to be transmitted and/or whether a piece of notification channel information (117) is to be suppressed in case it relates to one or to a plurality out of the following:
-- IP multimedia subsystem voice calls,
-- short message service messages,
-- over the top voice calls, especially differentiated per different application, especially whatsapp, signal, threema, skype,
-- over the top message services, especially differentiated per different application, especially whatsapp, signal, threema, skype,
-- over the top status updates of contacts, especially differentiated per different application, especially whatsapp, signal, threema, skype,
-- news ticker,
-- software updates.

5. Method according to one of the preceding claims, wherein the notification channel priority indication (119) refers to at least one out of the following:
-- first and/or second priority communication services, wherein the first priority communication services correspond to higher priority communication services and the second priority communication services correspond to lower priority communication services,
-- first, second and/or third priority communication services, wherein either the first and second priority communication services correspond to higher priority communication services and the third priority communication services correspond to lower priority communication services, or wherein the first priority communication services correspond to higher priority communication services and the second and third priority communication services correspond to lower priority communication services,
-- first, second, third and/or fourth priority communication services, wherein either
-- the first, second and third priority communication services correspond to higher priority communication services and the fourth priority communication services correspond to lower priority communication services, or
-- the first and second priority communication services correspond to higher priority communication services and the third and fourth priority communication services correspond to lower priority communication services, or
-- the first priority communication services correspond to higher priority communication services and the second, third and fourth priority communication services correspond to lower priority communication services.

6. Method according to one of the preceding claims, wherein the notification channel priority indication (119) is transmitted, to the radio access network (110), by means of one out of the following:
-- a packet data unit session resource setup request message, PDU session resource setup request message, especially sent by an access and mobility management function of the core network (120) to the respective network node of the access network (120), especially the serving base station entity (111), and especially in case that the user equipment (20) is in radio resource control-connected mode, RRC-connected mode, or in radio resource control-inactive mode, RRC-inactive mode,
-- a dynamic 5QI descriptor message, especially sent by the access and mobility management function of the core network (120) to the respective network node of the access network (120), especially the serving base station entity (111), and especially in case that the user equipment (20) is in radio resource control-connected mode, RRC-connected mode, or in radio resource control-inactive mode, RRC-inactive mode,
-- a paging message, especially in case that the user equipment (20) is in radio resource control-idle mode, RRC-idle mode.

7. Method according to one of the preceding claims, wherein the access network (110) corresponds to a terrestrial access network or to a non-terrestrial access network.

8. System or mobile communication network (100) for providing communication services to a user equipment (20) in a configurable manner using an access network (110) and the access network (110) using a notification channel (116), wherein the access network (110) is an access network (110) of or assigned to or associated with a mobile communication network (100), and wherein the mobile communication network (100) comprises or is assigned to or associated with a core network (120), wherein the notification channel (116) is used or able to be used in case that, due to having been out of coverage or having been provided with bad coverage, the user equipment (20) has been detected of not having responded to
-- an incoming call for the user equipment (20) and/or
-- an incoming paging indication for the user equipment (20) and/or
-- a downlink data transmission indication,
wherein the notification channel (116) is used to transmit, to the user equipment (20), one or a plurality of pieces of notification channel information (117), wherein, in order to use the notification channel (116) in a configurable manner, the core network (120) and/or the access network (110) receives and/or comprises a notification channel priority indication (119) and the system or mobile communication network (100) is configured such that:
-- based on the notification channel priority indication (119) and in case that a specific piece of notification channel information (117) is able to be transmitted or is potentially transmitted, by the core network (120) and/or by the access network (110), to the user equipment (20), it is detected whether the specific piece of notification channel information (117) is related to a higher priority communication service or to a lower priority communication service,
-- the specific piece of notification channel information (117) is transmitted, to the user equipment (20), in case that the specific piece of notification channel information (117) is related to the higher priority communication service and the specific piece of notification channel information (117) is suppressed from being transmitted in case that the specific piece of notification channel information (117) is related to the lower priority communication service,
wherein the access network (110) comprises at least one base station entity (111), wherein the at least one base station entity (111) is serving the user equipment (20), and wherein the notification channel (116) is used to transmit - by the serving base station entity (111) to the user equipment (20) - the one piece or the plurality of pieces of notification channel information (117),
wherein the transmission of the piece or pieces of notification channel information (117), via or using the notification channel (116), is based on using a special transmission mode or configuration, wherein the special transmission mode or configuration allows for an improved signal-to-noise ratio resulting in an increased link budget, wherein the improved link budget is at least 10 dB, preferably at least 15 dB, more preferably at least 18 dB improved compared to normal, or standard, downlink radio transmission from the serving base station entity (111) towards the user equipment (20).

9. User equipment (20) for being provided with communication services in a configurable manner using an access network (110) and a mobile communication network (100), wherein the user equipment (20) is part of a system or a mobile communication network (100) according to claim 8.

10. Program comprising a computer readable program code, which, when executed on a computer and/or on a user equipment (20) and/or on a network node of a mobile communication network (100), especially a network node of the core network (120) or of the access network (110), especially a serving base station entity (111) of the user equipment (20), or in part on a user equipment (20) and/or in part on network node of a mobile communication network (100), especially a network node of the core network (120) or of the access network (110), especially a serving base station entity (111) of the user equipment (20), causes the computer and/or the user equipment (20) and/or the network node of the mobile communication network (100) to perform a method according one of claims 1 to 7.

11. Computer-readable medium comprising instructions which when executed on a computer and/or on a user equipment (20) and/or on a network node of a mobile communication network (100), especially a network node of the core network (120) or of the access network (110), especially a serving base station entity (111) of the user equipment (20), or in part on a user equipment (20) and/or in part on network node of a mobile communication network (100), especially a network node of the core network (120) or of the access network (110), especially a serving base station entity (111) of the user equipment (20), causes the computer and/or the user equipment (20) and/or the network node of the mobile communication network (100) to perform a method according one of claims 1 to 7.

## Patentansprüche

1. Verfahren zum Bereitstellen von Kommunikationsdiensten für ein Benutzergerät (20) in konfigurierbarer Weise unter Verwendung eines Zugangsnetzes (110) und wobei das Zugangsnetz (110) einen Benachrichtigungskanal (116) verwendet, wobei das Zugangsnetz (110) ein Zugangsnetz (110) eines Mobilfunknetzes (100) ist oder diesem zugeordnet oder mit diesem assoziiert ist, und wobei das Mobilfunknetz (100) ein Kernnetz (120) umfasst oder diesem zugeordnet oder mit diesem assoziiert ist, wobei der Benachrichtigungskanal (116) verwendet wird oder verwendet werden kann in dem Fall, dass das Benutzergerät (20) aufgrund dessen, dass es außerhalb der Abdeckung war oder mit schlechter Abdeckung versorgt wurde, als nicht reagierend festgestellt wurde auf -- einen eingehenden Anruf für das Benutzergerät (20) und/oder -- eine eingehende Paging-Indikation für das Benutzergerät (20) und/oder -- eine Abwärtsstrecken-Datenübertragungsindikation, wobei der Benachrichtigungskanal (116) verwendet wird, um an das Benutzergerät (20) ein Stück oder eine Vielzahl von Stücken von Benachrichtigungskanal-Information (117) zu übertragen, wobei, um den Benachrichtigungskanal (116) in konfigurierbarer Weise zu verwenden, das Kernnetz (120) und/oder das Zugangsnetz (110) eine Benachrichtigungskanal-Prioritätsangabe (119) empfängt und/oder umfasst und das Verfahren die folgenden Schritte umfasst: -- in einem ersten Schritt wird, basierend auf der Benachrichtigungskanal-Prioritätsangabe (119) und in dem Fall, dass ein spezifisches Stück von Benachrichtigungskanal-Information (117) durch das Kernnetz (120) und/oder durch das Zugangsnetz (110) an das Benutzergerät (20) übertragen werden kann, festgestellt, ob das spezifische Stück von Benachrichtigungskanal-Information (117) sich auf einen Kommunikationsdienst höherer Priorität oder auf einen Kommunikationsdienst niedrigerer Priorität bezieht, -- in einem zweiten Schritt wird das spezifische Stück von Benachrichtigungskanal-Information (117) an das Benutzergerät (20) übertragen, in dem Fall, dass das spezifische Stück von Benachrichtigungskanal-Information (117) sich auf den Kommunikationsdienst höherer Priorität bezieht, und das spezifische Stück von Benachrichtigungskanal-Information (117) wird von der Übertragung unterdrückt, in dem Fall, dass das spezifische Stück von Benachrichtigungskanal-Information (117) sich auf den Kommunikationsdienst niedrigerer Priorität bezieht, wobei das Zugangsnetz (110) mindestens eine Basisstationseinheit (111) umfasst, wobei die mindestens eine Basisstationseinheit (111) das Benutzergerät (20) bedient, und wobei der Benachrichtigungskanal (116) verwendet wird, um -- durch die bedienende Basisstationseinheit (111) an das Benutzergerät (20) -- das eine Stück oder die Vielzahl von Stücken von Benachrichtigungskanal-Information (117) zu übertragen, wobei die Übertragung des Stücks oder der Stücke von Benachrichtigungskanal-Information (117), über oder unter Verwendung des Benachrichtigungskanals (116), auf der Verwendung eines speziellen Übertragungsmodus oder einer Konfiguration basiert, wobei der spezielle Übertragungsmodus oder die Konfiguration ein verbessertes Signal-Rausch-Verhältnis ermöglicht, das zu einem erhöhten Verbindungsbudget führt, wobei das verbesserte Verbindungsbudget mindestens 10 dB, vorzugsweise mindestens 15 dB, bevorzugter mindestens 18 dB verbessert ist im Vergleich zu normaler oder standardmäßiger Abwärtsstrecken-Funkübertragung von der bedienenden Basisstationseinheit (111) zum Benutzergerät (20).

2. Verfahren nach Anspruch 1, wobei das spezifische Stück von Benachrichtigungskanal-Information (117) sich auf mindestens eines der folgenden bezieht: -- einen Funkzugangsträger (115) oder eine Vielzahl von Funkzugangsträgern (115), den/die das Benutzergerät (20) gegenwärtig verwendet oder verwenden kann oder verwenden darf, -- ein Dienstgüte-Niveau oder eine Vielzahl von Dienstgüte-Niveaus, das/die das Benutzergerät (20) gegenwärtig verwendet oder verwenden kann oder verwenden darf, -- eine Anwendung, die auf dem Benutzergerät (20) läuft, oder eine Vielzahl von Anwendungen, die auf dem Benutzergerät (20) laufen.

3. Verfahren nach einem der vorhergehenden Ansprüche, wobei der Benachrichtigungskanal (116) von der Basisstationseinheit (111) oder von dem Zugangsnetz (110) ausschließlich in dem Fall verwendet wird oder verwendet werden kann, dass das Benutzergerät (20) von der Basisstationseinheit (111) oder von dem Zugangsnetz (110) als nicht reagierend festgestellt wurde auf -- einen eingehenden Anruf für das Benutzergerät (20) und/oder -- eine eingehende Paging-Indikation für das Benutzergerät (20) und/oder -- eine Abwärtsstrecken-Datenübertragungsindikation, wobei insbesondere der Benachrichtigungskanal (116) von der Basisstationseinheit (111) oder von dem Zugangsnetz (110) ausschließlich in dem Fall verwendet wird oder verwendet werden kann, dass das Benutzergerät (20) von der Basisstationseinheit (111) oder von dem Zugangsnetz (110) als endgültig nicht reagierend festgestellt wurde auf -- einen eingehenden Anruf für das Benutzergerät (20) und/oder -- eine eingehende Paging-Indikation für das Benutzergerät (20) und/oder -- eine Abwärtsstrecken-Datenübertragungsindikation.

4. Verfahren nach einem der vorhergehenden Ansprüche, wobei in einem dritten Schritt vor dem ersten Schritt das Benutzergerät (20) eine Benachrichtigungskanal-Konfigurationsnachricht an das Zugangsnetz (110) und/oder an das Kernnetz (120) überträgt, wobei die Benachrichtigungskanal-Konfigurationsnachricht die Benachrichtigungskanal-Prioritätsangabe (119) umfasst oder anzeigt, wobei insbesondere die Benachrichtigungskanal-Konfigurationsnachricht und/oder die Benachrichtigungskanal-Prioritätsangabe (119) anzeigt, ob ein Stück von Benachrichtigungskanal-Information (117) übertragen werden soll und/oder ob ein Stück von Benachrichtigungskanal-Information (117) unterdrückt werden soll, falls es sich auf eines oder eine Vielzahl der folgenden bezieht: -- IP-Multimedia-Subsystem-Sprachanrufe, -- Kurznachrichtendienst-Nachrichten, -- Over-the-Top-Sprachanrufe, insbesondere differenziert nach verschiedenen Anwendungen, insbesondere WhatsApp, Signal, Threema, Skype, -- Over-the-Top-Nachrichtendienste, insbesondere differenziert nach verschiedenen Anwendungen, insbesondere WhatsApp, Signal, Threema, Skype, -- Over-the-Top-Statusaktualisierungen von Kontakten, insbesondere differenziert nach verschiedenen Anwendungen, insbesondere WhatsApp, Signal, Threema, Skype, -- Nachrichtenticker,-Softwareaktualisierungen.

5. Verfahren nach einem der vorhergehenden Ansprüche, wobei die Benachrichtigungskanal-Prioritätsangabe (119) sich auf mindestens eines der folgenden bezieht: -- erste und/oder zweite Kommunikationsdienste mit Priorität, wobei die ersten Kommunikationsdienste mit Priorität Kommunikationsdiensten höherer Priorität entsprechen und die zweiten Kommunikationsdienste mit Priorität Kommunikationsdiensten niedrigerer Priorität entsprechen, -- erste, zweite und/oder dritte Kommunikationsdienste mit Priorität, wobei entweder die ersten und zweiten Kommunikationsdienste mit Priorität Kommunikationsdiensten höherer Priorität entsprechen und die dritten Kommunikationsdienste mit Priorität Kommunikationsdiensten niedrigerer Priorität entsprechen, oder wobei die ersten Kommunikationsdienste mit Priorität Kommunikationsdiensten höherer Priorität entsprechen und die zweiten und dritten Kommunikationsdienste mit Priorität Kommunikationsdiensten niedrigerer Priorität entsprechen, -- erste, zweite, dritte und/oder vierte Kommunikationsdienste mit Priorität, wobei entweder -- die ersten, zweiten und dritten Kommunikationsdienste mit Priorität Kommunikationsdiensten höherer Priorität entsprechen und die vierten Kommunikationsdienste mit Priorität Kommunikationsdiensten niedrigerer Priorität entsprechen, oder -- die ersten und zweiten Kommunikationsdienste mit Priorität Kommunikationsdiensten höherer Priorität entsprechen und die dritten und vierten Kommunikationsdienste mit Priorität Kommunikationsdiensten niedrigerer Priorität entsprechen, oder -- die ersten Kommunikationsdienste mit Priorität Kommunikationsdiensten höherer Priorität entsprechen und die zweiten, dritten und vierten Kommunikationsdienste mit Priorität Kommunikationsdiensten niedrigerer Priorität entsprechen.

6. Verfahren nach einem der vorhergehenden Ansprüche, wobei die Benachrichtigungskanal-Prioritätsangabe (119) an das Funkzugangsnetz (110) übertragen wird mittels eines der folgenden: -- einer Paketdateneinheit-Sitzungsressourcen-Einrichtungsanforderungsnachricht, PDU-Sitzungsressourcen-Einrichtungsanforderungsnachricht, insbesondere gesendet von einer Zugangs- und Mobilitätsverwaltungsfunktion des Kernnetzes (120) an den jeweiligen Netzknoten des Zugangsnetzes (120), insbesondere die bedienende Basisstationseinheit (111), und insbesondere in dem Fall, dass das Benutzergerät (20) im Funkressourcensteuerung-Verbindungsmodus, RRC-Verbindungsmodus, oder im Funkressourcensteuerung-Inaktivmodus, RRC-Inaktivmodus, ist, -- einer dynamischen 5QI-Deskriptor-Nachricht, insbesondere gesendet von der Zugangs- und Mobilitätsverwaltungsfunktion des Kernnetzes (120) an den jeweiligen Netzknoten des Zugangsnetzes (120), insbesondere die bedienende Basisstationseinheit (111), und insbesondere in dem Fall, dass das Benutzergerät (20) im Funkressourcensteuerung-Verbindungsmodus, RRC-Verbindungsmodus, oder im Funkressourcensteuerung-Inaktivmodus, RRC-Inaktivmodus, ist, -- einer Paging-Nachricht, insbesondere in dem Fall, dass das Benutzergerät (20) im Funkressourcensteuerung-Leerlaufmodus, RRC-Leerlaufmodus, ist.

7. Verfahren nach einem der vorhergehenden Ansprüche, wobei das Zugangsnetz (110) einem terrestrischen Zugangsnetz oder einem nicht-terrestrischen Zugangsnetz entspricht.

8. System oder Mobilfunknetz (100) zum Bereitstellen von Kommunikationsdiensten für ein Benutzergerät (20) in konfigurierbarer Weise unter Verwendung eines Zugangsnetzes (110) und wobei das Zugangsnetz (110) einen Benachrichtigungskanal (116) verwendet, wobei das Zugangsnetz (110) ein Zugangsnetz (110) eines Mobilfunknetzes (100) ist oder diesem zugeordnet oder mit diesem assoziiert ist, und wobei das Mobilfunknetz (100) ein Kernnetz (120) umfasst oder diesem zugeordnet oder mit diesem assoziiert ist, wobei der Benachrichtigungskanal (116) verwendet wird oder verwendet werden kann in dem Fall, dass das Benutzergerät (20) aufgrund dessen, dass es außerhalb der Abdeckung war oder mit schlechter Abdeckung versorgt wurde, als nicht reagierend festgestellt wurde auf -- einen eingehenden Anruf für das Benutzergerät (20) und/oder -- eine eingehende Paging-Indikation für das Benutzergerät (20) und/odereine Abwärtsstrecken-Datenübertragungsindikation, wobei der Benachrichtigungskanal (116) verwendet wird, um an das Benutzergerät (20) ein oder eine Vielzahl von Stücken von Benachrichtigungskanal-Information (117) zu übertragen, wobei, um den Benachrichtigungskanal (116) in konfigurierbarer Weise zu verwenden, das Kernnetz (120) und/oder das Zugangsnetz (110) eine Benachrichtigungskanal-Prioritätsangabe (119) empfängt und/oder umfasst und das System oder Mobilfunknetz (100) so konfiguriert ist, dass: -- basierend auf der Benachrichtigungskanal-Prioritätsangabe (119) und in dem Fall, dass ein spezifisches Stück von Benachrichtigungskanal-Information (117) durch das Kernnetz (120) und/oder durch das Zugangsnetz (110) an das Benutzergerät (20) übertragen werden kann oder potenziell übertragen wird, festgestellt wird, ob das spezifische Stück von Benachrichtigungskanal-Information (117) sich auf einen Kommunikationsdienst höherer Priorität oder auf einen Kommunikationsdienst niedrigerer Priorität bezieht, -- das spezifische Stück von Benachrichtigungskanal-Information (117) an das Benutzergerät (20) übertragen wird, in dem Fall, dass das spezifische Stück von Benachrichtigungskanal-Information (117) sich auf den Kommunikationsdienst höherer Priorität bezieht, und das spezifische Stück von Benachrichtigungskanal-Information (117) von der Übertragung unterdrückt wird, in dem Fall, dass das spezifische Stück von Benachrichtigungskanal-Information (117) sich auf den Kommunikationsdienst niedrigerer Priorität bezieht, wobei das Zugangsnetz (110) mindestens eine Basisstationseinheit (111) umfasst, wobei die mindestens eine Basisstationseinheit (111) das Benutzergerät (20) bedient, und wobei der Benachrichtigungskanal (116) verwendet wird, um -- durch die bedienende Basisstationseinheit (111) an das Benutzergerät (20) -- das eine Stück oder die Vielzahl von Stücken von Benachrichtigungskanal-Information (117) zu übertragen, wobei die Übertragung des Stücks oder der Stücke von Benachrichtigungskanal-Information (117), über oder unter Verwendung des Benachrichtigungskanals (116), auf der Verwendung eines speziellen Übertragungsmodus oder einer Konfiguration basiert, wobei der spezielle Übertragungsmodus oder die Konfiguration ein verbessertes Signal-Rausch-Verhältnis ermöglicht, das zu einem erhöhten Verbindungsbudget führt, wobei das verbesserte Verbindungsbudget mindestens 10 dB, vorzugsweise mindestens 15 dB, bevorzugter mindestens 18 dB verbessert ist im Vergleich zu normaler oder standardmäßiger Abwärtsstrecken-Funkübertragung von der bedienenden Basisstationseinheit (111) zum Benutzergerät (20).

9. Benutzergerät (20) zum Versorgtwerden mit Kommunikationsdiensten in konfigurierbarer Weise unter Verwendung eines Zugangsnetzes (110) und eines Mobilfunknetzes (100), wobei das Benutzergerät (20) Teil eines Systems oder eines Mobilfunknetzes (100) nach Anspruch 8 ist.

10. Programm, das einen computerlesbaren Programmcode umfasst, der, wenn er auf einem Computer und/oder auf einem Benutzergerät (20) und/oder auf einem Netzknoten eines Mobilfunknetzes (100), insbesondere einem Netzknoten des Kernnetzes (120) oder des Zugangsnetzes (110), insbesondere einer bedienenden Basisstationseinheit (111) des Benutzergeräts (20), oder teilweise auf einem Benutzergerät (20) und/oder teilweise auf einem Netzknoten eines Mobilfunknetzes (100), insbesondere einem Netzknoten des Kernnetzes (120) oder des Zugangsnetzes (110), insbesondere einer bedienenden Basisstationseinheit (111) des Benutzergeräts (20), ausgeführt wird, den Computer und/oder das Benutzergerät (20) und/oder den Netzknoten des Mobilfunknetzes (100) veranlasst, ein Verfahren nach einem der Ansprüche 1 bis 7 auszuführen.

11. Computerlesbares Medium, das Anweisungen umfasst, die, wenn sie auf einem Computer und/oder auf einem Benutzergerät (20) und/oder auf einem Netzknoten eines Mobilfunknetzes (100), insbesondere einem Netzknoten des Kernnetzes (120) oder des Zugangsnetzes (110), insbesondere einer bedienenden Basisstationseinheit (111) des Benutzergeräts (20), oder teilweise auf einem Benutzergerät (20) und/oder teilweise auf einem Netzknoten eines Mobilfunknetzes (100), insbesondere einem Netzknoten des Kernnetzes (120) oder des Zugangsnetzes (110), insbesondere einer bedienenden Basisstationseinheit (111) des Benutzergeräts (20), ausgeführt werden, den Computer und/oder das Benutzergerät (20) und/oder den Netzknoten des Mobilfunknetzes (100) veranlassen, ein Verfahren nach einem der Ansprüche 1 bis 7 auszuführen.

## Revendications

1. Procédé pour fournir des services de communication à un équipement utilisateur (20) de manière configurable en utilisant un réseau d'accès (110) et le réseau d'accès (110) utilisant un canal de notification (116), dans lequel le réseau d'accès (110) est un réseau d'accès (110) d'un réseau de communication mobile (100) ou assigné à ou associé à un réseau de communication mobile (100), et dans lequel le réseau de communication mobile (100) comprend ou est assigné à ou associé à un réseau cœur (120), dans lequel le canal de notification (116) est utilisé ou peut être utilisé dans le cas où, en raison d'avoir été hors couverture ou d'avoir été fourni avec une mauvaise couverture, l'équipement utilisateur (20) a été détecté comme n'ayant pas répondu à **--** un appel entrant pour l'équipement utilisateur (20) et/ou -- une indication de radiomessagerie entrante pour l'équipement utilisateur (20) et/ou -- une indication de transmission de données en liaison descendante, dans lequel le canal de notification (116) est utilisé pour transmettre, à l'équipement utilisateur (20), une pièce ou une pluralité de pièces d'information du canal de notification (117), dans lequel, afin d'utiliser le canal de notification (116) de manière configurable, le réseau cœur (120) et/ou le réseau d'accès (110) reçoit et/ou comprend une indication de priorité du canal de notification (119) et le procédé comprend les étapes suivantes :dans une première étape, sur la base de l'indication de priorité du canal de notification (119) et dans le cas où une pièce spécifique d'information du canal de notification (117) peut être transmise, par le réseau cœur (120) et/ou par le réseau d'accès (110), à l'équipement utilisateur (20), il est détecté si la pièce spécifique d'information du canal de notification (117) est liée à un service de communication de priorité supérieure ou à un service de communication de priorité inférieure, **--** dans une deuxième étape, la pièce spécifique d'information du canal de notification (117) est transmise, à l'équipement utilisateur (20), dans le cas où la pièce spécifique d'information du canal de notification (117) est liée au service de communication de priorité supérieure et la pièce spécifique d'information du canal de notification (117) est supprimée de la transmission dans le cas où la pièce spécifique d'information du canal de notification (117) est liée au service de communication de priorité inférieure, dans lequel le réseau d'accès (110) comprend au moins une entité de station de base (111), dans lequel la au moins une entité de station de base (111) dessert l'équipement utilisateur (20), et dans lequel le canal de notification (116) est utilisé pour transmettre **--** par l'entité de station de base (111) desservante à l'équipement utilisateur (20) **--** la une pièce ou la pluralité de pièces d'information du canal de notification (117), dans lequel la transmission de la pièce ou des pièces d'information du canal de notification (117), via ou en utilisant le canal de notification (116), est basée sur l'utilisation d'un mode de transmission spécial ou d'une configuration, dans lequel le mode de transmission spécial ou la configuration permet un rapport signal sur bruit amélioré résultant en un bilan de liaison augmenté, dans lequel le bilan de liaison amélioré est d'au moins 10 dB, de préférence d'au moins 15 dB, plus préférablement d'au moins 18 dB amélioré par rapport à une transmission radio en liaison descendante normale ou standard de l'entité de station de base (111) desservante vers l'équipement utilisateur (20).

2. Procédé selon la revendication 1, dans lequel la pièce spécifique d'information du canal de notification (117) se rapporte à au moins un des éléments suivants : -- un support d'accès radio (115) ou une pluralité de supports d'accès radio (115) que l'équipement utilisateur (20) utilise actuellement ou peut utiliser ou est autorisé à utiliser, **--** un niveau de qualité de service ou une pluralité de niveaux de qualité de service que l'équipement utilisateur (20) utilise actuellement ou peut utiliser ou est autorisé à utiliser, **--** une application fonctionnant sur l'équipement utilisateur (20) ou une pluralité d'applications fonctionnant sur l'équipement utilisateur (20).

3. Procédé selon l'une des revendications précédentes, dans lequel le canal de notification (116) est utilisé ou peut être utilisé, par l'entité de station de base (111) ou par le réseau d'accès (110), exclusivement dans le cas où l'équipement utilisateur (20) a été détecté, par l'entité de station de base (111) ou par le réseau d'accès (110), comme n'ayant pas répondu à **--** un appel entrant pour l'équipement utilisateur (20) et/ou -- une indication de radiomessagerie entrante pour l'équipement utilisateur (20) et/ou -- une indication de transmission de données en liaison descendante, dans lequel en particulier le canal de notification (116) est utilisé ou peut être utilisé, par l'entité de station de base (111) ou par le réseau d'accès (110), exclusivement dans le cas où l'équipement utilisateur (20) a été détecté, par l'entité de station de base (111) ou par le réseau d'accès (110), comme n'ayant finalement pas répondu à **--** un appel entrant pour l'équipement utilisateur (20) et/ou **--** une indication de radiomessagerie entrante pour l'équipement utilisateur (20) et/ou **--** une indication de transmission de données en liaison descendante.

4. Procédé selon l'une des revendications précédentes, dans lequel, dans une troisième étape avant la première étape, l'équipement utilisateur (20) transmet un message de configuration de canal de notification au réseau d'accès (110) et/ou au réseau cœur (120), dans lequel le message de configuration de canal de notification comprend, ou indique, l'indication de priorité du canal de notification (119), dans lequel en particulier le message de configuration de canal de notification et/ou l'indication de priorité du canal de notification (119) indique si une pièce d'information du canal de notification (117) doit être transmise et/ou si une pièce d'information du canal de notification (117) doit être supprimée dans le cas où elle se rapporte à un ou à une pluralité des éléments suivants : -- appels vocaux du sous-système multimédia IP, **--** messages du service de messages courts, **--** appels vocaux over the top, en particulier différenciés par différente application, en particulier WhatsApp, Signal, Threema, Skype,services de messagerie over the top, en particulier différenciés par différente application, en particulier WhatsApp, Signal, Threema, Skype, **--** mises à jour de statut de contacts over the top, en particulier différenciées par différente application, en particulier WhatsApp, Signal, Threema, Skype, **--** fil d'actualités, **--** mises à jour logicielles.

5. Procédé selon l'une des revendications précédentes, dans lequel l'indication de priorité du canal de notification (119) se réfère à au moins un des éléments suivants :
**--** premiers et/ou deuxièmes services de communication prioritaires, dans lequel les premiers services de communication prioritaires correspondent à des services de communication de priorité supérieure et les deuxièmes services de communication prioritaires correspondent à des services de communication de priorité inférieure,premiers, deuxièmes et/ou troisièmes services de communication prioritaires, dans lequel soit les premiers et deuxièmes services de communication prioritaires correspondent à des services de communication de priorité supérieure et les troisièmes services de communication prioritaires correspondent à des services de communication de priorité inférieure, soit dans lequel les premiers services de communication prioritaires correspondent à des services de communication de priorité supérieure et les deuxièmes et troisièmes services de communication prioritaires correspondent à des services de communication de priorité inférieure,premiers, deuxièmes, troisièmes et/ou quatrièmes services de communication prioritaires, dans lequel soit **--** les premiers, deuxièmes et troisièmes services de communication prioritaires correspondent à des services de communication de priorité supérieure et les quatrièmes services de communication prioritaires correspondent à des services de communication de priorité inférieure, ou **--** les premiers et deuxièmes services de communication prioritaires correspondent à des services de communication de priorité supérieure et les troisièmes et quatrièmes services de communication prioritaires correspondent à des services de communication de priorité inférieure, ou **--** les premiers services de communication prioritaires correspondent à des services de communication de priorité supérieure et les deuxièmes, troisièmes et quatrièmes services de communication prioritaires correspondent à des services de communication de priorité inférieure.

6. Procédé selon l'une des revendications précédentes, dans lequel l'indication de priorité du canal de notification (119) est transmise, au réseau d'accès radio (110), au moyen de l'un des éléments suivants : -- un message de demande de configuration de ressource de session d'unité de données par paquets, message de demande de configuration de ressource de session PDU, en particulier envoyé par une fonction de gestion d'accès et de mobilité du réseau cœur (120) au nœud de réseau respectif du réseau d'accès (120), en particulier l'entité de station de base (111) desservante, et en particulier dans le cas où l'équipement utilisateur (20) est en mode RRC connecté, ou en mode RRC inactif, **--** un message de descripteur 5QI dynamique, en particulier envoyé par la fonction de gestion d'accès et de mobilité du réseau cœur (120) au nœud de réseau respectif du réseau d'accès (120), en particulier l'entité de station de base (111) desservante, et en particulier dans le cas où l'équipement utilisateur (20) est en mode RRC connecté, ou en mode RRC inactif, **--** un message de radiomessagerie, en particulier dans le cas où l'équipement utilisateur (20) est en mode RRC inoccupé.

7. Procédé selon l'une des revendications précédentes, dans lequel le réseau d'accès (110) correspond à un réseau d'accès terrestre ou à un réseau d'accès non terrestre.

8. Système ou réseau de communication mobile (100) pour fournir des services de communication à un équipement utilisateur (20) de manière configurable en utilisant un réseau d'accès (110) et le réseau d'accès (110) utilisant un canal de notification (116), dans lequel le réseau d'accès (110) est un réseau d'accès (110) d'un réseau de communication mobile (100) ou assigné à ou associé à un réseau de communication mobile (100), et dans lequel le réseau de communication mobile (100) comprend ou est assigné à ou associé à un réseau cœur (120), dans lequel le canal de notification (116) est utilisé ou peut être utilisé dans le cas où, en raison d'avoir été hors couverture ou d'avoir été fourni avec une mauvaise couverture, l'équipement utilisateur (20) a été détecté comme n'ayant pas répondu à **--** un appel entrant pour l'équipement utilisateur (20) et/ou **--** une indication de radiomessagerie entrante pour l'équipement utilisateur (20) et/ou **--** une indication de transmission de données en liaison descendante, dans lequel le canal de notification (116) est utilisé pour transmettre, à l'équipement utilisateur (20), une ou une pluralité de pièces d'information du canal de notification (117), dans lequel, afin d'utiliser le canal de notification (116) de manière configurable, le réseau cœur (120) et/ou le réseau d'accès (110) reçoit et/ou comprend une indication de priorité du canal de notification (119) et le système ou réseau de communication mobile (100) est configuré de telle sorte que : -- sur la base de l'indication de priorité du canal de notification (119) et dans le cas où une pièce spécifique d'information du canal de notification (117) peut être transmise ou est potentiellement transmise, par le réseau cœur (120) et/ou par le réseau d'accès (110), à l'équipement utilisateur (20), il est détecté si la pièce spécifique d'information du canal de notification (117) est liée à un service de communication de priorité supérieure ou à un service de communication de priorité inférieure, **--** la pièce spécifique d'information du canal de notification (117) est transmise, à l'équipement utilisateur (20), dans le cas où la pièce spécifique d'information du canal de notification (117) est liée au service de communication de priorité supérieure et la pièce spécifique d'information du canal de notification (117) est supprimée de la transmission dans le cas où la pièce spécifique d'information du canal de notification (117) est liée au service de communication de priorité inférieure, dans lequel le réseau d'accès (110) comprend au moins une entité de station de base (111), dans lequel la au moins une entité de station de base (111) dessert l'équipement utilisateur (20), et dans lequel le canal de notification (116) est utilisé pour transmettre **--** par l'entité de station de base (111) desservante à l'équipement utilisateur (20) **--** la une pièce ou la pluralité de pièces d'information du canal de notification (117), dans lequel la transmission de la pièce ou des pièces d'information du canal de notification (117), via ou en utilisant le canal de notification (116), est basée sur l'utilisation d'un mode de transmission spécial ou d'une configuration, dans lequel le mode de transmission spécial ou la configuration permet un rapport signal sur bruit amélioré résultant en un bilan de liaison augmenté, dans lequel le bilan de liaison amélioré est d'au moins 10 dB, de préférence d'au moins 15 dB, plus préférablement d'au moins 18 dB amélioré par rapport à une transmission radio en liaison descendante normale ou standard de l'entité de station de base (111) desservante vers l'équipement utilisateur (20).

9. Équipement utilisateur (20) pour être fourni avec des services de communication de manière configurable en utilisant un réseau d'accès (110) et un réseau de communication mobile (100), dans lequel l'équipement utilisateur (20) fait partie d'un système ou d'un réseau de communication mobile (100) selon la revendication 8.

10. Programme comprenant un code de programme lisible par ordinateur, qui, lorsqu'il est exécuté sur un ordinateur et/ou sur un équipement utilisateur (20) et/ou sur un nœud de réseau d'un réseau de communication mobile (100), en particulier un nœud de réseau du réseau cœur (120) ou du réseau d'accès (110), en particulier une entité de station de base (111) desservante de l'équipement utilisateur (20), ou en partie sur un équipement utilisateur (20) et/ou en partie sur un nœud de réseau d'un réseau de communication mobile (100), en particulier un nœud de réseau du réseau cœur (120) ou du réseau d'accès (110), en particulier une entité de station de base (111) desservante de l'équipement utilisateur (20), amène l'ordinateur et/ou l'équipement utilisateur (20) et/ou le nœud de réseau du réseau de communication mobile (100) à exécuter un procédé selon l'une des revendications 1 à 7.

11. Support lisible par ordinateur comprenant des instructions qui, lorsqu'elles sont exécutées sur un ordinateur et/ou sur un équipement utilisateur (20) et/ou sur un nœud de réseau d'un réseau de communication mobile (100), en particulier un nœud de réseau du réseau cœur (120) ou du réseau d'accès (110), en particulier une entité de station de base (111) desservante de l'équipement utilisateur (20), ou en partie sur un équipement utilisateur (20) et/ou en partie sur un nœud de réseau d'un réseau de communication mobile (100), en particulier un nœud de réseau du réseau cœur (120) ou du réseau d'accès (110), en particulier une entité de station de base (111) desservante de l'équipement utilisateur (20), amènent l'ordinateur et/ou l'équipement utilisateur (20) et/ou le nœud de réseau du réseau de communication mobile (100) à exécuter un procédé selon l'une des revendications 1 à 7.
